Europäisches Patentamt

European Patent Office

Office européen des brevets

(19)

(11) Numéro de publication : **0 109 891 B1**

(12) **FASCICULE DE BREVET EUROPÉEN**

(45) Date de publication du fascicule du brevet :
21.01.87

(51) Int. Cl.⁴ : **B 23 K   9/06**

(21) Numéro de dépôt : **83402179.2**

(22) Date de dépôt : **10.11.83**

(54) **Dispositif d'amorçage par haute fréquence et électrode auxiliaire d'un arc électrique de soudage ou de coupage.**

(30) Priorité : **12.11.82 FR 8219007**

(43) Date de publication de la demande :
**30.05.84 Bulletin 84/22**

(45) Mention de la délivrance du brevet :
**21.01.87 Bulletin 87/04**

(84) Etats contractants désignés :
**BE DE FR GB IT NL**

(56) Documents cités :
**FR-A- 2 275 963**
**FR-A- 2 404 372**
**FR-A- 2 447 770**
**NL-A- 6 801 103**
**US-A- 2 516 037**
**US-A- 3 089 019**

(73) Titulaire : **LA SOUDURE AUTOGENE FRANCAISE**
**75, Quai d'Orsay**
**F-75007 Paris (FR)**
**BE DE FR GB NL**
**L'AIR LIQUIDE, SOCIETE ANONYME POUR L'ETUDE
ET L'EXPLOITATION DES PROCEDES GEORGES
CLAUDE**
**75, Quai d'Orsay**
**F-75321 Paris Cedex 07 (FR)**
**IT**

(72) Inventeur : **Legrand, Pierre**
**5, place Adenauer**
**F-95300 Pontoise (FR)**
Inventeur : **Arnout, Michel**
**15, rue de la Mare aux Fées Citeepineguyon**
**F-95130 Franconville (FR)**

(74) Mandataire : **Leclercq, Maurice et al**
**L'AIR LIQUIDE SOCIETE ANONYME POUR L'ETUDE
ET L'EXPLOITATION DES PROCEDES GEORGES
CLAUDE 75, Quai d'Orsay**
**F-75321 Paris Cedex 07 (FR)**

EP 0 109 891 B1

## Description

La présente invention est relative à un dispositif d'amorçage d'un arc électrique entre une électrode principale non consommable et une pièce à souder ou à couper sous une atmosphère gazeuse conduite au travers d'une buse entourant l'électrode, comprenant un générateur haute fréquence-haute tension alimentant un premier circuit d'amorçage reliant l'électrode principale à une électrode auxiliaire porté par la buse, un deuxième circuit d'amorçage que relie l'une des électrode à la pièce. L'invention s'applique notamment au soudage automatique du type TIG, c'est-à-dire à électrode non consommable sous flux gazeux. Un tel dispositif est décrit dans le document FR-A-2 404 372.

Les dispositifs d'amorçage du type ci-dessus permettent d'utiliser au moins en partie dans le circuit HF des conducteurs ou câbles de soudage. De la sorte, les pertes HF sont considérablement réduites, si bien que le générateur HF peut être disposé à une certaine distance de la torche de soudage manuel ou de la tête de soudage automatique. En particulier, dans le cas des machines de soudage automatique, il en résulte une diminution appréciable de l'encombrement de la tête de soudage.

Cependant, les dispositifs d'amorçage connus ne conduisent pas un amorçage sûr et instantané de l'arc ; c'est ainsi qu'il arrive que l'arc ne s'établisse que lorsque l'électrode principale se trouve à une très faible distance de la pièce. Comme conséquence, les machines de soudage automatique doivent être équipées, en plus d'un détecteur de courant de soudage, d'un dispositif d'approche de la tête de soudage à deux vitesses (une vitesse rapide puis une vitesse lente) commandé par un détecteur de proximité, ce qui complique l'installation et allonge la durée de chaque cycle de soudage.

D'autre part, les dispositifs d'amorçage connus ne donnent pas satisfaction pour le soudage des alliages légers sous hélium en procédé TIG.

Dans le cas particulier du dispositif décrit dans le document FR-A 2 404 372, si l'arc est bien initié par la HF, il est maintenu par superposition d'un courant continu qui risque de détériorer les électrodes.

L'invention a pour but un dispositif d'amorçage permettant d'obtenir un amorçage instantané et parfaitement fiable quels que soient la matière de la pièce à souder et le gaz de protection utilisé, à une distance pièce-électrode principale relativement importante.

A cet effet, l'invention a pour objet un dispositif d'amorçage du type précité, caractérisé en ce que le générateur haute fréquence-haute tension est également raccordé au deuxième circuit d'amorçage de façon permanente et en ce que l'impédance HF du premier circuit d'amorçage est nettement supérieure à celle du deuxième circuit. De la sorte, c'est la seule HF qui assure automatiquement l'initiation de l'arc et son transfert sur la pièce traitée sans aucun risque de détérioration des électrodes de la torche.

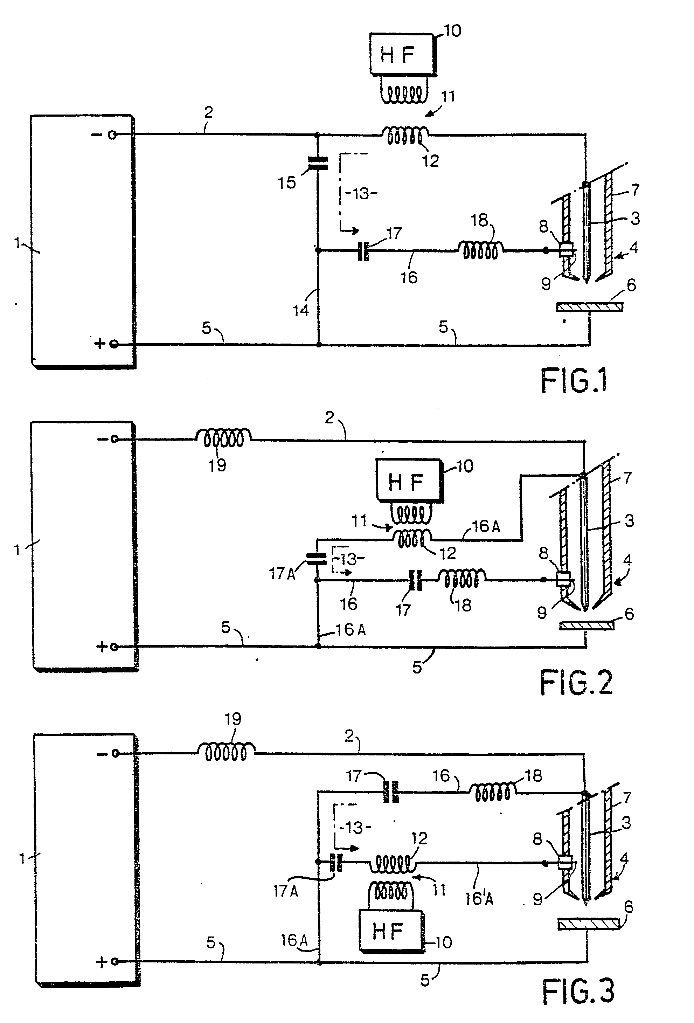

L'invention est maintenant décrite en détail en regard du dessin annexé, sur lequel les figures 1 à 3 représentent respectivement les schémas électriques de trois modes de réalisation de cette invention.

Sur chacune des figures 1 à 3, on a illustré l'application de l'invention au soudage TIG en courant continu sous simple flux gazeux. Chacune des installations de soudage considérées comprend ainsi un générateur de courant continu 1 dont une borne négative (—) est reliée par un conducteur 2 à une électrode principale 3 d'une torche ou d'une tête de soudage 4 et dont une borne positive (+) est reliée par un autre conducteur 5 à une pièce à souder 6.

La torche ou la tête 4 comporte une buse 7 de conduite d'un gaz protecteur qui entoure coaxialement l'électrode 3. Dans sa partie d'extrémité, cette buse 7 porte une douille isolante 8 qui la traverse radialement et qui sert de support à une électrode auxiliaire 9 dirigée vers l'électrode principale 3, et à faible écart de celle-ci.

Chacun des trois modes de réalisation représentés comprend un générateur 10 de courant haute fréquence-haute tension, constitué par exemple par un circuit oscillant à éclateur alimenté en 220 V alternatif et pourvu d'un transformateur haute fréquence 11. L'enroulement secondaire 12 du transformateur 11 alimente deux circuits d'amorçage HF en parallèle dont l'un, référencé 13, relie l'électrode principale 3 à l'électrode auxiliaire 9.

On détaille maintenant les particularités de chacune des installations des figures 1, 2 et 3.

Dans l'installation selon la figure 1, l'enroulement secondaire 12 du transformateur HF est en série avec le conducteur de puissance 2 et le circuit d'amorçage 13 incorpore un condensateur d'isolement 17 pour le courant de soudage en série avec une bobine d'induction 18. Le second circuit d'amorçage relie, par un conducteur 14 à condensateur d'isolement 15 pour le courant de soudage et le conducteur 5, une borne de l'enroulement secondaire 12 à la pièce 6.

En fonctionnement, lorsque la torche ou la tête 4 se trouve loin de la pièce 6, la mise sous tension du générateur HF 10 engendre entre les deux électrodes, par l'intermédiaire du seul circuit 13, une décharge HF d'amorçage qui ionise le gaz traversant la buse 7.

Lorsqu'on approche alors la torche ou la tête 4 de la pièce 6, on forme, pour une certaine distance d'écartement électrode 3-pièce 6, un second circuit d'amorçage HF constitué par l'enroulement 12, l'électrode 3, le conducteur 14 à condensateur d'isolement 15, le conducteur 5, la pièce 6 et l'intervalle électrode principale 3-pièce 6. Ce second circuit d'amorçage possède, pour cette distance électrode 3-pièce 6, une impédance HF nettement inférieure à celle du premier circuit d'amorçage 13, du fait de l'insertion de la bobine d'induction 18 dans le circuit 13. De la sorte, l'essentiel de l'énergie HF d'amorçage est émis non plus entre les deux électrodes 3 et 9, mais dans l'intervalle de travail utile, à savoir dans celui séparant l'électrode principale 3 de la pièce 6. Le condensateur 15 constitue un quasi-court-circuit HF et un interrupteur pour le courant de soudage, ce qui protège le générateur 1, tandis que le condensateur 17 empêche le courant continu de soudage de passer par l'électrode auxiliaire 9.

Les essais effectués par la demanderesse ont montré que l'on obtient ainsi un amorçage parfaitement fiable de l'arc de soudage entre l'électrode 3 et la pièce 6 à des distances d'écartement pouvant aller jusqu'à 1 cm environ, quelles que soient la nature de la matière de la pièce 6 et la nature du gaz protecteur utilisé, en particulier dans le soudage sous hélium d'alliages légers. En soudage automatique, il est alors possible de faire approcher rapidement la tête 4 de la pièce 6, par exemple à une vitesse de l'ordre de 1 m/mn, et d'arrêter cette approche par une simple détection du courant de soudage au moyen d'un dispositif classique non représenté.

L'agencement de la figure 2 est dans l'ensemble analogue au précédent mais permet de diminuer la longueur de conducteur de puissance parcourue par le courant HF.

En effet, dans cette forme de réalisation, un premier conducteur 16 A à fort isolement HF relie l'électrode 3 au conducteur de puissance 5. Dans ce conducteur 16A sont montés en série, à partir de l'électrode 3, l'enroulement secondaire 12 du transformateur HF 11 et un condensateur 17 A. Le conducteur 16 incorporant le condensateur 17 et la bobine d'induction 18 relie l'électrode auxiliaire 9 au conducteur 5.

Cette installation fonctionne de la même manière que celle de la figure 1, par émission d'une décharge HF d'amorçage d'abord entre les deux électrodes 3-9, puis, dès que l'électrode 3 est suffisamment rapprochée de la pièce 6 (distance de l'ordre du centimètre), essentiellement entre l'électrode 3 et la pièce 6, du fait que le second circuit d'amorçage 16 A-5 présente une impédance HF nettement inférieure à celle du circuit 13. Pour éviter le passage du courant HF vers le générateur 1, le conducteur de puissance 2 comporte une bobine d'arrêt 19. Les condensateurs 17 et 17 A servent à empêcher le passage de court-circuit du courant de soudage.

Selon la figure 3, dans le premier circuit d'amorçage 13, l'enroulement secondaire 12 du générateur HF est ici raccordé par le conducteur 16′ A à l'électrode auxiliaire 9, tandis que le conducteur 16 incorporant le condensateur 17 et la bobine d'induction 18 est raccordée à l'électrode principale 3. Le second circuit de décharge HF incorpore le condensateur d'isolement 17 A, les conducteurs 16 A et 5, la pièce 6 et le conducteur 16′ A, la décharge HF intervenant entre électrode 9 et pièce 6, le cas échéant via une partie de l'électrode 3.

A titre d'exemple numérique, des essais satisfaisants ont été réalisés en soudage automatique avec une bobine d'induction 18 possédant une inductance de 50 à 60 µH, avec une fréquence HF de 1 à 1,5 MHz et une longueur de câble de l'ordre de 16 m entre le transformateur HF 11 et la tête de soudage 4. On a ainsi obtenu une fiabilité totale de l'amorçage avec un rapport des impédances des deux circuits d'amorçage de l'ordre de 5.

Le dispositif d'amorçage suivant l'invention peut être utilisé en soudage TIG à courant continu ou alternatif, manuel ou automatique, à simple flux ou à double flux de gaz, et également en soudage ou en coupage plasma. Dans ces deux derniers cas, l'électrode auxiliaire est remplacée par la tuyère qui entoure coaxialement l'électrode, et le premier amorçage (circuit 13) sert à l'établissement d'un arc pilote. Lorsque le travail à l'arc s'effectue en courant alternatif, le générateur HF 10 peut être modifié de façon classique pour faire du dispositif un dispositif d'amorçage et de stabilisation, c'est-à-dire d'amorçage et de réamorçage à chaque alternance ou à chaque demi-alternance du courant de soudage.

## Revendications

1. Dispositif d'amorçage d'un arc électrique entre une électrode principale non consommable (3) et une pièce (6) à souder ou à couper sous une atmosphère gazeuse conduite au travers d'une buse (7) entourant l'électrode comprenant :

un générateur à courant continu (1) branché entre électrode (3) et pièce (6) ;

un générateur haute fréquence-haute tension (10) alimentant un premier circuit d'amorçage (13) reliant l'électrode principale (3) à une électrode auxiliaire (9) portée par la buse ;

un deuxième circuit d'amorçage (5) qui relie l'une des électrodes (3, 9) à la pièce (6) ; caractérisé en ce que :

le générateur haute fréquence (10) est également raccordé via (14) ou (16 A) au deuxième circuit d'amorçage (5) de façon permanente ;

l'impédance HF du premier circuit d'amorçage (13) est nettement supérieure à celle du deuxième circuit (14-5) ou (16 A, 5).

2. Dispositif d'amorçage suivant la revendication 1, caractérisé en ce que le premier circuit d'amorçage (13) incorpore une bobine d'induction (18).

3. Dispositif d'amorçage suivant la revendication 2, caractérisé en ce que le premier circuit d'amorçage (13) incorpore un condensateur (17) en série avec ladite bobine (18).

4. Dispositif d'amorçage suivant l'une quelconque des revendications 1 à 3, caractérisé en ce que le deuxième circuit d'amorçage (16 A, 5) relie l'électrode auxiliaire (9) à la pièce (6), via l'électrode principale (3) (figure 3).

5. Dispositif d'amorçage suivant l'une quelconque des revendications 1 à 4, caractérisé en ce que le rapport des impédances HF des deux circuits d'amorçage est de l'ordre de 5.

**Claims**

1. Ignition device of an electric arc between a non consumable main electrode (3) and a work piece (6) to be welded or to be cut under a gasous atmosphere conducted transversally of an nozzle (7) surrounding the electrode, comprising :

a direct current generator (1) connected between electrode (3) and work piece (6) ;

a high frequency-high tension generator (10) feeding a first ignition circuit (13) connecting the main electrode (3) to an auxiliary electrode (9) supported by the nozzle ;

a second ignition circuit (5) which connects one of the electrodes (3, 9) to the work piece (6) ; characterized in that :

the high frequency generator (10) is also permanently joined via (14) or (16 A) to the second ignition circuit (5) ;

the impedance HF of the first ignition circuit (13) is substantially larger than that of the second circuit (14-5) or (16 A, 5).

2. Ignition device according to claim 1, characterized in that the first ignition circuit (13) incorporates an induction bobbin (18).

3. Ignition device according to claim 2, characterized in that the first ignition circuit (13) incorporates in series to the said bobbin (18) a condenser (17).

4. Ignition device according to one of the claims 1 to 3, characterized in that the second ignition circuit (16 A, 5) connects the auxiliary electrode (9) to the work piece (6), via the main electrode (3) (Figure 3).

5. Ignition device according to any of the claims 1 to 4, characterized in that the ratio of the impedances of the two ignition circuits is in the order of 5.

**Patentansprüche**

1. Zündvorrichtung für einen Lichtbogen zwischen einer nicht verbrauchbaren Hauptelektrode (3) und einem Werkstück (6), welches unter einer gasförmigen, quer zu einer die Elektrode umgreifenden Düse (7) geleiteten Atmosphäre zu schweißen oder zu schneiden ist, mit :

einem Gleichstromgenerator (1), der zwischen Elektrode (3) und Werstück (6) geschaltet ist ;

einem Hochfrequenz-Hochspannungsgenerator (10) zur Versorgung eines ersten Zündkreises (13), welcher die Hauptelektrode (3) mit einer von der Düse getragenen Hilfselektrode (9) verbindet ;

einem zweiten Zündkreis (5), welcher eine der Elektroden (3, 9) mit dem Werstück (6) verbindet ;

dadurch gekennzeichnet, daß :

der Hochfrequenzgenerator (10) ebenfalls über (14) oder (16 A) permanent an den zweiten Zündkreis (5) angeschlossen ist ;

die Impedanz HF des ersten Zündkreises (13) erheblich über der des zweiten Kreises (14-5) oder (16 A, 5) liegt.

2. Zündvorrichtung nach Anspruch 1, dadurch gekennzeichnet, daß der erste Zündkreis (13) eine Induktionsspule (18) aufweist.

3. Zündvorrichtung nach Anspruch 2, dadurch gekennzeichnet, daß der erste Zündkreis (13) einen mit der Spule (18) in Reihe liegenden Kondensator (17) aufweist.

4. Zündvorrichtung nach einem der Ansprüche 1 bis 3, dadurch gekennzeichnet, daß der zweite Zündkreis (16 A, 5) die Hilfselektrode (9) über die Hauptelektrode (3) mit dem Werkstück (6) verbindet (Figur 3).

5. Zündvorrichtung nach einem der Ansprüche 1 bis 4, dadurch gekennzeichnet, daß das Verhältnis der Impedanzen HF der zwei Zündkreise in der Größenordnung von 5 liegt.

FIG.1

FIG.2

FIG.3